# FASCICULE DE BREVET EUROPEEN

(11) **EP 2 836 890 B1**
(45) Date de publication et mention de la délivrance du brevet: **21.08.2019**
(21) Numéro de dépôt: 13702056.6
(22) Date de dépôt: 31.01.2013
(51) Int. Cl.: G06F 3/01

(54) **PERIPHERIQUE D'INTERACTION APTE A CONTROLER UN ELEMENT DE TOUCHER ET DE PREHENSION D'OBJETS VIRTUELS MULTIDIMENSIONNELS**
PERIPHERE INTERAKTIONSVORRICHTUNG ZUR STEUERUNG EINES ELEMENTS ZUR BERÜHRUNG UND ERGREIFUNG MEHRDIMENSIONALER VIRTUELLER OBJEKTE
INTERACTION PERIPHERAL DEVICE CAPABLE OF CONTROLLING AN ELEMENT FOR TOUCHING AND GRASPING MULTIDIMENSIONAL VIRTUAL OBJECTS

(30) Priorité: 31.01.2012 FR 1250878
(43) Date de publication de la demande: 18.02.2015
(73) Titulaire: INRIA - Institut National de Recherche en Informatique et en Automatique, 78153 Le Chesnay Cedex (FR); Institut Polytechnique de Grenoble, 38000 Grenoble (FR)
(72) Inventeur: CHARDONNET, Jean-Rémy, Kouni, Edward, Grégoire, F-71100 Chalon Sur Saone (FR); LEON, Jean-Claude, F-38610 Gieres (FR)
(74) Mandataire: Cabinet Netter
(86) Numéro de dépôt international: PCT/EP2013/051954
(87) Numéro de publication internationale: WO 2013/113844

(56) Documents cités:
- EP-A2- 2 381 340
- FR-A1- 2 916 869
- US-A- 5 631 861
- US-A- 6 042 555
- US-A1- 2004 174 337
- US-A1- 2006 049 920
- JEAN-RÉMY CHARDONNET ET AL: "Un périphérique pour la saisie réaliste d objets avec retour tactile", 5ÈMES JOURNÉES DE L'ASSOCIATION FRANÇAISE DE RÉALITÉ VIRTUELLE (2010), , 10 novembre 2010 (2010-11-10), pages 1-8, XP007921264, Extrait de l'Internet: URL:http://hal.inria.fr/docs/00/53/46/93/P DF/AFRV2010.pdf [extrait le 2012-11-09]
- CHARDONNET ET AL: "Designing and evolving hands-on interaction prototypes for virtual reality", PROCEEDINGS OF VIRTUAL REALITY INTERNATIONAL CONFERENCE (VRIC 2010, , 7 avril 2010 (2010-04-07), pages 1-10, XP007921267, Extrait de l'Internet: URL:http://hal.inria.fr/docs/00/46/72/05/P DF/HN_VRIC2010.pdf [extrait le 2012-11-09]
- JEAN-RÉMY CHARDONNET ET AL: "DESIGN OF AN IMMERSIVE PERIPHERAL FOR OBJECT GRASPING", PROCEEDINGS OF THE ASME 2010 INTERNATIONAL DESIGN ENGINEERING TECHNICAL CONFERENCES & COMPUTERS AND INFORMATION IN ENGINEERING CONFERENCE IDETC/CIE 2010, , no. DETC2010-28416 15 août 2010 (2010-08-15), pages 1-10, XP007921268, Extrait de l'Internet: URL:http://hal.inria.fr/docs/00/50/31/26/P DF/ASME2010_v1.pdf [extrait le 2012-11-09]
- JEAN-REMY CHARDONNEL ET AL: "Hand Navigator : Prototypages de périphériques d interaction pour le contrôle d une main virtuelle", 4ÈME JOURNÉES DE L'ASSOCIATION FRANÇAISE DE RÉALITÉ VIRTUELLE, , 12 novembre 2009 (2009-11-12), pages 1-7, XP007921269, Extrait de l'Internet: URL:http://hal.inria.fr/docs/00/43/15/32/P DF/template.pdf [extrait le 2012-11-09]

## Description

La présente invention concerne un périphérique d'interaction apte à contrôler un élément de toucher et de préhension d'objets virtuels multidimensionnels.

L'invention se situe dans le domaine des interfaces utilisateur, en particulier les interfaces utilisateur évoluées pour immersion dans des environnements virtuels.

L'invention trouve des applications dans de nombreux domaines utilisant des environnements virtuels, par exemple la simulation physique et médicale, les procédés industriels, la téléopération.

Avec le développement de la capacité de modélisation et d'affichage d'objets et de scènes virtuelles, de nombreuses solutions ont été proposées pour faciliter la manipulation des objets dans des environnements virtuels, notamment par la transformation des mouvements d'une main réelle en mouvements de main virtuelle, afin de rendre la manipulation plus ergonomique.

Divers périphériques d'interaction ont été développés, permettant un contrôle d'objets virtuels multidimensionnels, basés sur des systèmes de capture optique de mouvements, par exemple par l'intermédiaire de caméras, ou sur des systèmes de capture mécanique, par exemple des gants munis de capteurs. La performance des systèmes de capture optique est fortement dépendante du nombre et de la position des caméras. Pour ce qui est des systèmes de capture mécanique comportant des gants, leur calibration est très sensible, et donc ils sont peu adaptés pour une utilisation de masse.

De plus, ces systèmes ne sont pas ergonomiques car ils requièrent la réalisation de manipulations à main levée, ce qui est fatiguant pour un opérateur.

On connaît par ailleurs des périphériques plus proches de la souris habituellement utilisée avec les ordinateurs, comme par exemple le périphérique SpaceNavigator (marque déposée), qui a un maximum de six degrés de liberté. Un tel périphérique est bien adapté pour des tâches de pointage, mais pas pour des tâches de manipulations complexes d'objets tridimensionnels.

En particulier, un périphérique tel le SpaceNavigator (marque déposée) ne fournit pas de retour haptique ou pseudo-haptique, permettant à un opérateur d'expérimenter une sensation tactile de contact, analogue à la sensation de toucher avec un objet réel. Le terme de pseudo-haptique désigne le fait que le retour tactile n'est pas directement corrélé avec la masse de l'objet manipulé.

Les inventeurs ont décrit dans l'article « Un périphérique pour la saisie réaliste d'objets avec retour tactile », publié en 2010, 5èmes Journées de l'Association Française de la Réalité Virtuelle, un périphérique d'interaction à retour pseudo-haptique à main nue. Il s'agit d'un périphérique d'interaction apte à contrôler une main virtuelle, composé de modules d'interaction, un module permettant de contrôler un ou plusieurs doigts. Chaque module comporte un vibreur apte à émettre une vibration lors du toucher d'un objet virtuel par le doigt virtuel actionné par le module. Ce périphérique d'interaction est ergonomique car il est actionnable par une main d'opérateur posée dessus, ce qui évite la fatigue musculaire de l'opérateur. Un vibreur est intégré dans chaque module afin de réaliser un retour pseudo-haptique de toucher et de préhension des objets virtuels, permettant à l'opérateur de mieux manipuler des objets virtuels tridimensionnels. Cependant, le retour pseudo-haptique réalisé dans le périphérique décrit dans cet article est diffus et ne permet pas à l'opérateur de l'exploiter pleinement pour améliorer la manipulation d'objets virtuels.

Le document "Un périphérique pour la saisie réaliste d'objets avec retour tactile" de Jean-Rémy Chardonnet et al, 5èmes Journées De L'association Française De Réalité Virtuelle (2010) 10 novembre 2010 (2010-11-10), pages 1-8, le document US 2004/174337 A1, le document US 6 042 555 A, le document US 5 631 861 A, le document "Design Of An Immersive Peripheral For Object Grasping" de Jean-Rémy Chardonnet et al, Proceedings Of The Asme 2010 International Design Engineering Technical Conférences & Computers And Information In Engineering Conférence Idetc/Cie 2010, no. DETC2010-28416 15 août 2010 (2010-08-15), pages 1-10, le document "Hand Navigator : Prototypages de périphériques d interaction pour le contrôle d une main virtuelle" de Jean-Remy Chardonnel et al, 4ème Journées De L'association Française De Réalité Virtuelle, 12 novembre 2009 (2009-11-12), pages 1-7, le document EP 2 381 340 A2, le document FR 2 916 869 A1 et le document US 2006/049920 A1 décrivent un périphérique d'interaction selon le préambule de la revendication 1.

Il existe donc un besoin de pallier cet inconvénient en améliorant la précision du retour haptique ou pseudo-haptique d'un périphérique d'interaction du type décrit ci-dessus.

A cet effet, l'invention propose un périphérique d'interaction selon la revendication indépendante 1.

Avantageusement, le fait de fixer les modules d'interaction par une jonction en matériau amortissant permet d'atténuer voire d'annuler les propagations vibratoires dans tout le périphérique, et permet à un opérateur de localiser précisément le doigt pour lequel le vibreur est actif. Ainsi, le retour haptique ou pseudo-haptique est amélioré.

Comme spécifié par les revendications dépendantes 2 à 9, le périphérique d'interaction selon l'invention peut présenter une ou plusieurs des caractéristiques ci-dessous, prises indépendamment ou en combinaison :
- lesdits modules d'interaction sont montés avec un espacement entre eux d'au moins un écart d prédéterminé ;
- il comporte une structure en au moins deux parties, aptes à être fixées ensemble, lesdits modules d'interaction étant fixés à une desdites parties par une jonction en matériau amortissant d'épaisseur maximale prédéterminée ;
- ledit matériau amortissant est un matériau à dureté Shore A inférieure ou égale à cinquante ;
- il comporte en outre une poignée apte à saisir des forces appliquées par la paume de l'opérateur, reliée à un dispositif contrôlant le déplacement du poignet de l'opérateur, et mobile dans un nombre de degrés de liberté par rapport audit dispositif, ledit dispositif étant apte à envoyer des ordres de déplacement à l'élément de toucher et de préhension d'objets virtuels ;
- le dispositif contrôlant le déplacement du poignet de l'opérateur est en outre apte à fournir un contrôle en force et en moment du poignet de l'opérateur ;
- ledit capteur de commande est apte à saisir des déplacements de flexion/extension d'une phalange du doigt de l'opérateur ;
- ledit capteur de commande est en outre apte à saisir des déplacements de adduction/abduction d'une phalange du doigt de l'opérateur ;
- il comporte quatre modules d'interaction destinés à être actionnés respectivement par le pouce, l'index, le majeur et l'annulaire de l'opérateur, l'élément de toucher et de préhension d'objets virtuels étant une main virtuelle, chaque module d'interaction étant apte à commander le doigt correspondant de la main virtuelle.

D'autres caractéristiques et avantages de l'invention ressortiront de la description qui en est donnée ci-dessous, à titre indicatif et nullement limitatif, en référence aux figures annexées, parmi lesquelles :
- la figure 1 représente une vue schématique d'un périphérique d'interaction selon l'invention, relié à un ordinateur pourvu d'un écran ;
- la figure 2 représente schématiquement un module d'interaction en vue de dessus ;
- la figure 3 représente une vue du dessous d'un mode de réalisation d'un périphérique d'interaction selon l'invention, et
- la figure 4 représente un mode de réalisation alternatif d'une jonction de module d'interaction selon l'invention.

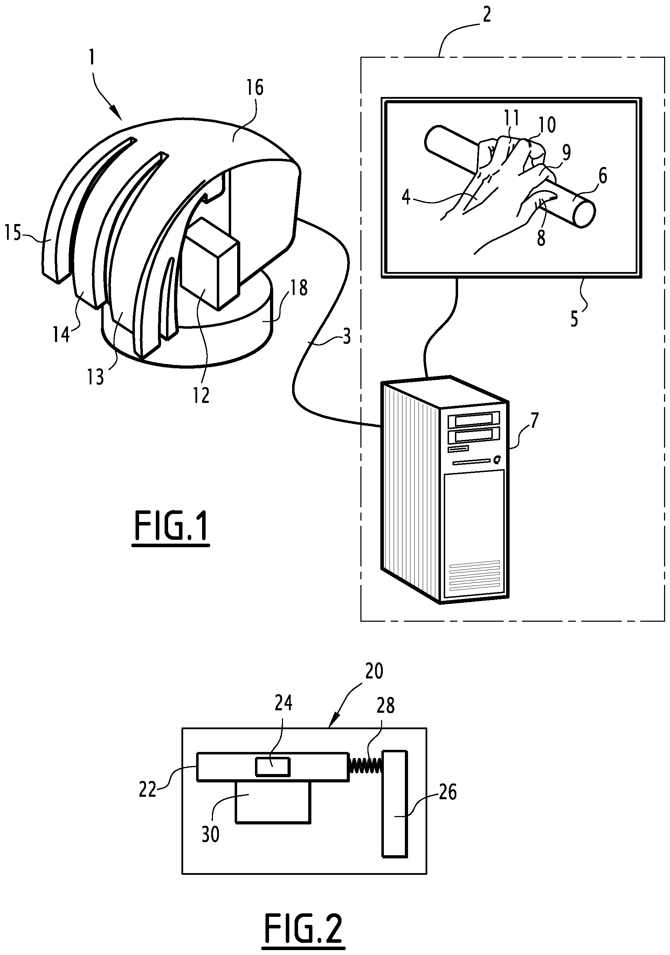

La figure 1 représente un périphérique d'interaction 1 relié à un ordinateur 2 via une connexion 3.

Comme illustré sur la figure 1, le périphérique 1 selon l'invention est adapté à ce qu'une main d'un opérateur (non représentée) se pose dessus afin de manipuler un élément de toucher et de préhension 4 qui est une main virtuelle dans cet exemple. La main virtuelle 4 est représentée sur l'écran 5 de l'ordinateur 2. La main virtuelle 4 est apte à se déplacer dans l'espace virtuel représenté sur l'écran 5, et par exemple à toucher, tourner, saisir, lâcher, déplacer l'objet virtuel 6 qui est bidimensionnel ou tridimensionnel, affiché via une interface d'affichage adéquate.

L'écran 5 de l'ordinateur 2 est relié à un dispositif programmable 7 comportant des unités de traitement classiques, notamment un convertisseur analogique numérique apte à récupérer des signaux de commande transmis par la connexion 3 et à les transformer en informations de déplacement de la main virtuelle 4 sur l'écran 5, de caractérisation du contact entre les doigts de la main virtuelle et un objet virtuel, de pression entre les doigts de la main virtuelle et l'objet virtuel. Le dispositif programmable 7 comporte également un processeur de traitement, apte à effectuer des opérations de calcul lorsque l'ordinateur 2 est mis sous tension.

La main virtuelle 4 comprend une pluralité de doigts virtuels, dont au moins une partie est activable par les doigts de l'opérateur positionnés sur le périphérique d'interaction 1. Ainsi, les doigts référencés 8, 9, 10, 11 de la main virtuelle 4 sont activables dans cet exemple, correspondant respectivement au pouce, index, majeur et annulaire de la main virtuelle, chacun de ces doigts étant mis en action par un module d'interaction correspondant du périphérique 1.

Ainsi, le périphérique 1 comprend les modules d'interaction suivants : le module 12 correspondant au pouce 8, le module 13 correspondant à l'index 9, le module 14 correspondant au majeur 10 et le module 15 correspondant à l'annulaire 11.

D'autres agencements sont possibles en alternative.

Par exemple, le périphérique 1 peut comprendre un nombre de modules d'interaction variable entre deux et cinq, chaque module d'interaction étant commandé par un doigt de l'opérateur.

Selon une alternative, le nombre de parties (par exemple le nombre de doigts de la main virtuelle) de l'élément de toucher et de préhension 4 actionnables par les modules d'interaction est différent du nombre de modules d'interaction. Par exemple, dans un mode de réalisation, l'élément de toucher et de préhension 4 est une main virtuelle à cinq doigts, mais l'annulaire et l'auriculaire de la main virtuelle 4 sont actionnés par le même module d'interaction 15 actionné par l'annulaire de l'opérateur.

Le périphérique 1 comporte, en plus des modules d'interaction adaptés à être commandés par les doigts, et plus précisément, dans ce mode de réalisation, les extrémités des doigts correspondant à la dernière phalange, une partie ou poignée 16 adaptée à recevoir la paume de la main de l'opérateur ainsi que son auriculaire.

L'ensemble des modules d'interaction 12, 13, 14, 15 et la poignée 16 sont montés sur un dispositif 18 assurant le mouvement du poignet de l'opérateur afin de saisir la position et l'orientation de la main de l'opérateur dans l'espace, avec un nombre prédéterminé de degrés de liberté. Par exemple, le dispositif 18 est une souris 3D de type SpaceNavigator (marque déposée) avec un nombre de degrés de liberté égal à six.

En variante, et selon l'application visée, on peut utiliser un dispositif 18 permettant d'obtenir la position et l'orientation de la main de l'opérateur dans l'espace avec moins de six degrés de liberté.

Dans ce mode de réalisation, les mouvements des extrémités des doigts et de la paume de main de l'opérateur par rapport à son poignet sont transmis au dispositif 18, qui transmet ces informations de mouvement, sous forme de signaux de commande, à l'ordinateur 2 via la connexion filaire 3.

Dans un mode de réalisation alternatif, le dispositif 18 est en outre apte à fournir un contrôle de la force et du moment appliqués au poignet de l'opérateur lors de la manipulation, et à fournir ces informations de force et de moment, sous forme de signaux de commande, à l'ordinateur 2.

Un logiciel mettant en oeuvre un modèle d'articulation de main virtuelle, mis en oeuvre dans le dispositif programmable 7 de l'ordinateur 2, permet de transformer ces signaux de commande pour restituer le mouvement de l'opérateur dans la main virtuelle 4. Par exemple, un tel modèle d'articulation est décrit dans l'article « Interactions Capture and Synthesis » ACM Transactions on Graphics,(2006), pp 872-880, par P. Kry et D.K. Pai.

En particulier, pour réaliser la préhension d'un objet virtuel, afin de le saisir, de le déplacer ou de le retourner par exemple, des forces de pression appliquées par les extrémités des doigts de l'opérateur sont saisies via le système expliqué ci-dessus et interprétées.

Le périphérique 1 selon l'invention, comprend plusieurs modules d'interaction, chaque module d'interaction étant apte à recevoir une pression de l'extrémité du doigt de l'opérateur, selon un mouvement de flexion/extension ou d'adduction/abduction pour commander la préhension d'un objet virtuel, et à renvoyer un retour tactile de manière à améliorer la perception de l'opérateur et à rendre plus réaliste une préhension de l'objet virtuel.

La figure 2 représente une vue de dessus schématique d'un module d'interaction 20 selon l'invention.

Un tel module d'interaction 20 comporte un capteur de commande ou unité de commande 22, qui est un capteur de type levier mono-axe dans le mode de réalisation préféré, comportant une partie saillante 24 sur laquelle l'extrémité du doigt de l'opérateur agit directement.

Un capteur de type levier mono-axe présente l'avantage d'être un capteur de type interrupteur, recevant une commande de type « tout ou rien », permettant un contrôle en vitesse du déplacement de la phalange qui l'actionne. Il suffit de lâcher le capteur de commande pour qu'il revienne à sa position initiale, et que le doigt virtuel commandé par le capteur de commande s'arrête. Ce capteur assure les mouvements de flexion/extension du doigt correspondant, à l'exception de l'auriculaire dont la commande est la même que celle de l'annulaire dans le mode de réalisation de la figure 1, dans lequel le périphérique 1 comprend quatre modules d'interaction. Avantageusement, une faible amplitude de déplacement du doigt de l'opérateur permet le contrôle du doigt virtuel.

Selon un mode de réalisation alternatif, le capteur de commande est mis en oeuvre par une boule de commande, connue sous le nom de « mini-trackball », pouvant prendre en charge les mouvements de flexion/extension et d'adduction/abduction du doigt de l'opérateur. Ainsi, dans ce mode de réalisation alternatif, plus de degrés de liberté du déplacement d'une phalange de l'opérateur sont pris en compte. Le contrôle du doigt peut alors être réalisé en déplacement à partir du déplacement de la phalange qui l'actionne.

Le module d'interaction 20 comporte également un capteur de pression 26, par exemple de type résistif, apte à délivrer un signal représentatif de la pression exercée par le doigt de l'opérateur sur ce module, afin de générer un effort de compression de la part de l'opérateur lors de la saisie d'un objet virtuel, de manière analogue à la saisie d'un objet naturel.

Un ressort de rappel 28 entre le capteur de commande 22 et le capteur de pression 26 permet de séparer le capteur de pression 26 du capteur de commande 22. Le ressort de rappel 28 est optionnel.

De plus, le module d'interaction 20 comporte un vibreur 30, par exemple du type vibreur de téléphone portable, apte à émettre une vibration pendant une courte période suivant le contact d'un doigt virtuel commandé par le capteur de commande 22 avec un objet virtuel. Selon un mode de réalisation, la période de vibration est de l'ordre d'une demi-seconde.

Selon un mode de réalisation alternatif, la vibration dure un temps variable fonction de l'analyse de la configuration de la main réalisée dans le dispositif programmable 7, et la désactivation du vibreur 30 est déclenchée selon l'état du capteur de pression 26.

Ainsi, lors d'une phase de saisie ou serrage d'un objet virtuel multidimensionnel, un opérateur manipule le capteur de commande 22, en fournissant un effort très faible pour l'actionner. Le doigt virtuel correspondant se rapproche de l'objet virtuel à saisir.

Dès que le contact est établi, le capteur de commande 22 est désactivé, et le vibreur 30 génère une vibration, permettant à l'opérateur d'appréhender perceptuellement le changement d'état du doigt virtuel. La désactivation du capteur de commande 22 évite l'interpénétration du doigt virtuel commandé avec l'objet virtuel saisi.

Le capteur de pression 26 est actionné, opposant une résistance passive qui permet à l'opérateur de développer un effort de serrage croissant lors de la phase de serrage. L'effort de serrage est borné par la capacité maximale du capteur de pression 26, le capteur de commande 22 étant déjà inactif.

Ce principe de fonctionnement est applicable à chaque doigt, indépendamment des autres, permettant ainsi de reproduire toutes les configurations naturelles de saisie d'objets.

Dans le cadre d'une opération de lâcher ou desserrage d'un objet virtuel, la succession d'activation des divers éléments du module d'interaction 20 est la suivante. Initialement, la main virtuelle est en contact avec l'objet virtuel, donc en particulier un des doigts virtuels est en contact avec l'objet virtuel et le capteur de pression 26 du module d'interaction 20 correspondant est actif.

Lorsqu'un seuil de sensibilité du capteur de pression 26 est atteint, correspondant à la capacité minimale du capteur de pression 26, le capteur de pression 26 est désactivé et le capteur de commande 22 est activé. Cela permet la commande de déplacement en vitesse du doigt correspondant à sa séparation de l'objet virtuel. Dans un mode de réalisation, le vibreur 30 est activé au moment de la désactivation du capteur de pression 26. Alternativement, le vibreur 30 est inactif pendant l'opération de lâcher d'objet virtuel.

Le fonctionnement décrit ci-dessus par module d'interaction est appliqué quasi simultanément pour tous les modules d'interaction pour commander l'ensemble des doigts virtuels de la main virtuelle lors d'une phase de saisie/serrage ou de lâcher/desserrage d'objet virtuel.

On note que le comportement du périphérique d'interaction selon l'invention est du type pseudo-haptique, les efforts mis en oeuvre n'étant pas dépendants de la masse de l'objet virtuel saisi.

Selon un mode de réalisation, le périphérique d'interaction peut être relié à un dispositif 18 de déplacement du poignet et de contrôle de l'effort et du moment du poignet, correspondant à un bras haptique capable de délivrer des efforts correspondants à la masse de l'objet manipulé et à son comportement dynamique. Dans un tel mode de réalisation, le dispositif complet comportant le bras haptique et le périphérique d'interaction selon l'invention est de type haptique.

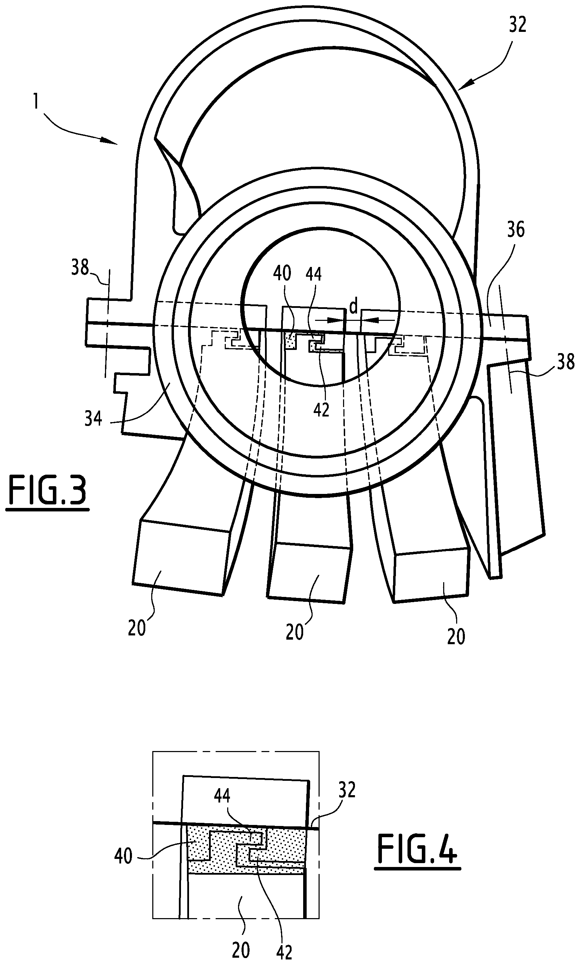

La figure 3 illustre en vue du dessous d'un mode de réalisation d'un périphérique d'interaction 1 selon l'invention.

Le périphérique 1 comporte, dans ce mode de réalisation, une coque de structure 32 formée de deux parties 34 et 36, jointes par des moyens de fixation, comme par exemple des vis 38. La partie 34 reçoit les modules d'interaction 20 décrits ci-dessus. Les modules d'interaction sont intégrés à la partie 34 de la coque 32, espacés entre eux d'un espace d minimum prédéterminé, de l'ordre de 5 mm plus ou moins 2 mm, de manière à éviter tout contact et toute diffusion vibratoire entre les modules.

En variante, la coque de structure 32 est formée en une seule partie, par moulage par exemple.

Selon une autre variante, la coque de structure 32 est formée d'un nombre de parties plus grand que deux, en fonction par exemple de contraintes ergonomiques ou de fabrication.

Chaque module d'interaction 20 est relié à la coque 32 par une jonction 40 en matériau amortissant à faible dureté Shore A, typiquement inférieure ou égale à 50, disposé sur une épaisseur maximale prédéterminée, de l'ordre de 5 mm, cette valeur ayant été retenue pour ne pas alourdir la masse du périphérique 1. De préférence, le matériau amortissant utilisé pour la jonction est une résine silicone ou bien du polyuréthane, dont les caractéristiques physiques permettent un amortissement élevé des vibrations, tout en permettant un bon retour haptique, avec une masse suffisamment faible pour ne pas alourdir le périphérique 1. La résine silicone ou polyuréthane est utilisée entre la coque 32 et chaque module d'interaction 20. Le matériau amortissant est fixé entre chaque module d'interaction 20 et la coque 32 par adhésion.

Le choix du matériau amortissant, sa dureté et sa répartition en épaisseur sont déterminées expérimentalement pour satisfaire les objectifs d'amortissement des vibrations, de transmission d'effort ou retour haptique par module, et de bonne adhésion. En particulier le matériau amortissant sélectionné présente une raideur suffisante pour une bonne transmission d'effort tout en permettant un amortissement suffisant.

Dans le mode de réalisation illustré, chaque module d'interaction 20 est fixé à la coque de structure 32 par des éléments de fixation de type crochets 42, 44, qui s'imbriquent. L'épaisseur de la jonction 40 en matériau amortissant est inférieure à l'épaisseur maximale prédéterminée au niveau des interstices entre les crochets 42 et 44, par exemple de l'ordre de 2 mm.

Tout autre système de fixation du module d'interaction 20 à la coque de structure 32 peut être envisagé en variante, le point commun des diverses réalisations possibles étant la présence d'une jonction 40 en matériau amortissant.

Un mode de réalisation alternatif de la jonction 40 est illustré à la figure 4. Dans ce mode de réalisation alternatif, le matériau amortissant formant la jonction 40 recouvre les crochets 42, 44 de fixation mécanique, sur une épaisseur prédéterminée, qui est supérieure ou égale à 5 mm.

Selon un autre mode de réalisation alternatif, la résine est étendue à toute la coque 32 afin d'amortir les vibrations entre la paume de la main et cette coque 32.

Chaque jonction 40 en matériau amortissant est indépendante des autres, de manière à éviter tout contact entre deux modules d'interaction entre eux, afin d'améliorer l'amortissement des vibrations entre modules d'interaction. De préférence, un espacement de l'ordre de 5 mm est prévu entre les jonctions en matériau amortissant.

Ainsi, une isolation vibratoire est obtenue.

Dans un mode de réalisation de la coque 32 en deux parties, chaque partie comporte un évidement, et lorsqu'elles sont jointes, elles forment un évidement, en forme de dôme, apte à recevoir le dispositif 18 (non représenté sur la figure).

Dans un mode de réalisation, la partie 34 de la coque 32 destinée à recevoir les modules d'interaction comporte des emplacements pré-usinés prévus pour le montage des modules d'interaction.

Avantageusement, une isolation vibratoire est ainsi obtenue, ce qui permet de transmettre à l'opérateur une sensation tactile corrélée au doigt qui applique le contact, ce qui permet ensuite à l'opérateur d'ajuster sa manipulation de manière fine.

## Revendications

1. Périphérique d'interaction (1) apte à contrôler un élément de toucher et de préhension (4) d'objets virtuels multidimensionnels, le périphérique comportant au moins deux modules d'interaction (12, 13, 14, 15, 20), chaque module d'interaction (12, 13, 14, 15, 20) étant destiné à être actionné par un doigt d'un opérateur et comportant un capteur de commande (22) permettant de commander un déplacement, selon un nombre de degrés de liberté prédéterminé, d'une partie (8, 9, 10, 11) de l'élément de toucher et de préhension (4) d'objets virtuels, par déplacement en flexion/extension et/ou adduction/abduction du doigt de l'opérateur et un vibreur (30) apte à émettre une vibration lors du toucher et/ou du lâcher d'un objet virtuel par une partie (8, 9, 10, 11) dudit élément de toucher et de préhension (4) d'objets virtuels, chaque module d'interaction comportant en outre un capteur de pression (26), apte à délivrer un signal représentatif de la pression exercée par l'opérateur et à exercer une résistance à la force de pression exercée par l'opérateur,
le périphérique étant **caractérisé en ce que** chaque module d'interaction (12, 13, 14, 15, 20) est fixé audit périphérique par une jonction (40) en matériau amortissant
le périphérique
d'interaction étant en outre **caractérisé en ce que** :
- lors du serrage d'un objet virtuel par actionnement d'un doigt de l'opérateur sur un module d'interaction (20), la succession suivante de fonctionnement des capteurs et du vibreur dudit module d'interaction (20) est mise en oeuvre :
- activation du capteur de commande (22) jusqu'au contact avec ledit objet virtuel,
- désactivation du capteur de commande (22) et activation du vibreur (30),
- activation du capteur de pression (26),
et/ou
- lors du desserrage d'un objet virtuel par actionnement d'un doigt de l'opérateur sur un module d'interaction (20), la succession suivante de fonctionnement des capteurs et du vibreur dudit module d'interaction (20) est mise en oeuvre :
- activation du capteur de pression (26) jusqu'à ce qu'un seuil de sensibilité dudit capteur de pression soit atteint,
- désactivation du capteur de pression (26) et activation du vibreur (30),
- activation du capteur de commande (22).

2. Périphérique d'interaction selon la revendication 1, **caractérisé en ce que** lesdits modules d'interaction (12, 13, 14, 15, 20) sont montés avec un espacement entre eux d'au moins un écart d prédéterminé.

3. Périphérique d'interaction selon l'une quelconque des revendications précédentes, **caractérisé en ce qu'**il comporte une structure (32) en au moins deux parties (34, 36), aptes à être fixées ensemble, lesdits modules d'interaction (12, 13, 14, 15, 20) étant fixés à une desdites parties par une jonction (40) en matériau amortissant d'épaisseur maximale prédéterminée.

4. Périphérique d'interaction selon l'une quelconque des revendications précédentes, **caractérisé en ce que** ledit matériau amortissant est un matériau à dureté Shore A inférieure ou égale à cinquante.

5. Périphérique d'interaction selon l'une quelconque des revendications précédentes, **caractérisé en ce qu'**il comporte en outre une poignée (16) apte à saisir des forces appliquées par la paume de l'opérateur, reliée à un dispositif (18) contrôlant le déplacement du poignet de l'opérateur, et mobile dans un nombre de degrés de liberté par rapport audit dispositif, ledit dispositif (18) étant apte à envoyer des ordres de déplacement à l'élément de toucher et de préhension (4) d'objets virtuels.

6. Périphérique d'interaction selon la revendication 5, **caractérisé en ce que** le dispositif (18) contrôlant le déplacement du poignet de l'opérateur est en outre apte à fournir un contrôle en force et en moment du poignet de l'opérateur.

7. Périphérique d'interaction selon l'une quelconque des revendications précédentes, **caractérisé en ce que** ledit capteur de commande (22) est apte à saisir des déplacements de flexion/extension d'une phalange du doigt de l'opérateur.

8. Périphérique d'interaction selon la revendication 7, **caractérisé en ce que** ledit capteur de commande (22) est en outre apte à saisir des déplacements de adduction/abduction d'une phalange du doigt de l'opérateur.

9. Périphérique d'interaction selon l'une quelconque des revendications précédentes, **caractérisé en ce qu'**il comporte quatre modules d'interaction destinés à être actionnés respectivement par le pouce, l'index, le majeur et l'annulaire de l'opérateur et **en ce que** l'élément de toucher et de préhension (4) d'objets virtuels est une main virtuelle, chaque module d'interaction étant apte à commander le doigt correspondant de la main virtuelle.

## Patentansprüche

1. Interaktionsperipheriegerät (1), das in der Lage ist, ein Berührungs- und Greifelement (4) für mehrdimensionale virtuelle Objekte zu steuern, wobei die Vorrichtung mindestens zwei Interaktionsmodule (12, 13, 14, 15, 20) umfasst, wobei jedes Interaktionsmodul (12, 13, 14, 15, 20) durch einen Finger eines Bedieners betätigt werden kann und einen Steuersensor (22) umfasst, der eine Bewegung entsprechend einer vorgegebenen Anzahl von Freiheitsgraden eines Teils (8, 9, 10, 11) des Berührungs- und Greifelements (4) für virtuelle Objekte steuern kann, durch Beugungs-/Dehnungsbewegung und/oder Adduktions-/Abduktionsbewegung des Fingers des Bedieners und einen Vibrator (30), der in der Lage ist, eine Vibration auszusenden, wenn ein virtuelles Objekt durch einen Teil (8, 9, 10, 11) des Berührungs- und Greifelements (4) für virtuelle Objekte berührt und/oder losgelassen wird, wobei jedes Interaktionsmodul ferner einen Drucksensor (26) umfasst, der in der Lage ist, ein Signal zu übermitteln, das dem vom Bediener ausgeübten Druck entspricht, und einen Widerstand gegen die vom Bediener ausgeübte Druckkraft auszuüben,
wobei das Peripheriegerät **dadurch gekennzeichnet ist, dass** jedes Interaktionsmodul (12, 13, 14, 15, 20) an dem Peripheriegerät durch eine Verbindung (40) aus Dämpfungsmaterial befestigt ist,
wobei das Interaktionsperipheriegerät ferner **dadurch gekennzeichnet ist, dass**:
- beim Einspannen eines virtuellen Objekts durch Betätigen eines Fingers des Bedieners auf einem Interaktionsmodul (20) folgende Betriebsabfolge der Sensoren und des Vibrators des Interaktionsmoduls (20) ausgeführt wird:
- Aktivieren des Steuersensors (22) bis zum Kontakt mit dem virtuellen Objekt,
- Deaktivieren des Steuersensors (22) und Aktivieren des Vibrators (30),
- Aktivieren des Drucksensors (26)
und/oder
- beim Loslassen eines virtuellen Objekts durch Betätigen eines Fingers des Bedieners auf einem Interaktionsmodul (20) folgende Betriebsabfolge der Sensoren und des Vibrators des Interaktionsmoduls (20) ausgeführt wird:
- Aktivieren des Drucksensors (26), bis ein Empfindlichkeitsschwellenwert des Drucksensors erreicht ist,
- Deaktivieren des Drucksensors (26) und Aktivieren des Vibrators (30),
- Aktivieren des Steuersensors (22).

2. Interaktionsperipheriegerät nach Anspruch 1, **dadurch gekennzeichnet, dass** die Interaktionsmodule (12, 13, 14, 15, 20) mit einem Abstand zueinander montiert sind, der mindestens einer vorgegebenen Spanne d entspricht.

3. Interaktionsperipheriegerät nach einem der vorstehenden Ansprüche, **dadurch gekennzeichnet, dass** es eine Struktur (32) aus mindestens zwei Teilen (34, 36) umfasst, die miteinander verbunden sein können, wobei die Interaktionsmodule (12, 13, 14, 15, 20) an einem der Teile durch eine Verbindung (40) aus dämpfendem Material mit vorgegebener maximaler Dicke befestigt sind.

4. Interaktionsperipheriegerät nach einem der vorstehenden Ansprüche, **dadurch gekennzeichnet, dass** das dämpfende Material ein Material mit einer Shore-Härte A von weniger als oder gleich fünfzig ist.

5. Interaktionsperipheriegerät nach einem der vorstehenden Ansprüche, **dadurch gekennzeichnet, dass** es ferner einen Griff (16) umfasst, der Kräfte erfassen kann, die durch die Handfläche des Bedieners ausgeübt werden, die mit einer Vorrichtung (18) verbunden ist, die die Bewegung des Handgelenks des Bedieners steuert, und der in einer Anzahl von Freiheitsgraden in Bezug zur Vorrichtung beweglich ist, wobei die Vorrichtung (18) in der Lage ist, Bewegungsbefehle an das Berührungs- und Greifelement (4) für virtuelle Objekte zu senden.

6. Interaktionsperipheriegerät nach Anspruch 5, **dadurch gekennzeichnet, dass** die Vorrichtung (18), die die Bewegung des Handgelenks des Bedieners steuert, ferner in der Lage ist, eine Kraft- und Drehmomentsteuerung des Handgelenks des Bedieners zu bewirken.

7. Interaktionsperipheriegerät nach einem der vorstehenden Ansprüche, **dadurch gekennzeichnet, dass** der Steuersensor (22) in der Lage ist, Beugungs-/Dehnungsbewegungen eines Fingerglieds des Bedieners zu erfassen.

8. Interaktionsperipheriegerät nach Anspruch 7, **dadurch gekennzeichnet, dass** der Steuersensor (22) ferner in der Lage ist, Adduktions-/Abduktionsbewegungen eines Fingerglieds des Bedieners zu erfassen.

9. Interaktionsperipheriegerät nach einem der vorstehenden Ansprüche, **dadurch gekennzeichnet, dass** es vier Interaktionsmodule umfasst, die dafür vorgesehen sind, jeweils durch den Daumen, Zeigefinger, Mittelfinger und Ringfinger des Bedieners betätigt zu werden, und dass das Berührungs- und Greifelement (4) für virtuelle Objekte eine virtuelle Hand ist, wobei jedes Interaktionsmodul in der Lage ist, den entsprechenden Finger der virtuellen Hand zu steuern.

## Claims

1. An interaction peripheral device (1) capable of controlling an element for touching and grasping (4) multidimensional virtual objects, the peripheral device including at least two interaction modules (12, 13, 14, 15, 20), each interaction module (12, 13, 14, 15, 20) being intended to be actuated by a finger of an operator and including a control sensor (22) with which a displacement may be controlled according to a predetermined number of degrees of freedom, of a portion (8, 9, 10, 11) of the element for touching and grasping (4) of virtual objects, by bending/extending and/or adduction/abduction displacement of the finger of the operator and a vibrator (30) able to emit a vibration upon touching and/or letting go of a virtual object by a portion (8, 9, 10, 11) of said element for touching and grasping (4) virtual objects, each interaction module further including a pressure sensor (26), capable of delivering a representative signal of the pressure exerted by the operator and of exerting resistance to the pressure force exerted by the operator, the peripheral device being **characterized in that** each interaction module (12, 13, 14, 15, 20) is attached to said peripheral device through a connection (40) in a damping material, the peripheral device being further **characterized in that**:
- upon clamping a virtual object by actuating a finger of the operator on an interaction module (20), the following operational succession of the sensors and of the vibrator of said interaction module (20) is applied:
- activation of the control sensor (22) until contact with said virtual object,
- deactivation of the control sensor (22) and activation of the vibrator (30),
- activation of the pressure sensor (26),
and/or
- upon loosening a virtual object by actuating a finger of the operator on an interaction module (20), the following operational succession of the sensors and of the vibrator of said interaction module (20) is applied:
- activation of the pressure sensor (26) until a sensitivity threshold of said pressure sensor is reached,
- deactivation of the pressure sensor (26) and activation of the vibrator (30),
- activation of the control sensor (22).

2. The interaction peripheral device according to claim 1, **characterized in that** said interaction modules (12, 13, 14, 15, 20) are mounted with a spacing between them of at least one predetermined distance d.

3. The interaction peripheral device according to any of the preceding claims, **characterized in that** it includes a structure (32) in at least two portions (34, 36), capable of being attached together, said interaction modules (12, 13, 14, 15, 20) being attached to one of said portions through a connection (40) in a damping material with a predetermined maximum thickness.

4. The interaction peripheral device according to any of the preceding claims, **characterized in that** said damping material is a material with a Shore A hardness of less than or equal to fifty.

5. The interaction peripheral device according to any of the preceding claims, **characterized in that** it further includes a handle (16) capable of sensing forces applied by the palm of the operator, connected to a device (18) controlling the displacement of the wrist of the operator, and mobile in a number of degrees of freedom relatively to said device, said device (18) of being capable of sending displacement commands to the element for touching and grasping (4) virtual objects.

6. The interaction peripheral device according to claim 6, **characterized in that** the device (18) controlling displacement of the wrist of the operator is further capable of providing a force and torque control of the wrist of the operator.

7. The interaction peripheral device according to any of the preceding claims, **characterized in that** said control sensor (22) is able to sense bending/extending displacements of a phalanx of the finger of the operator.

8. The interaction peripheral device according to claim 8, **characterized in that** said control sensor (22) is further able to sense adduction/abduction displacements of a phalanx of the finger of the operator.

9. The interaction peripheral device according to any of the preceding claims, **characterized in that** it includes four interaction modules intended to be respectively actuated by the thumb, the forefinger, the middle finger and the ring finger of the operator and **in that** the element for touching and grasping (4) virtual objects is a virtual hand, each interaction module being able to control the corresponding finger of the virtual hand.
